(19)

**Europäisches Patentamt**
**European Patent Office**
**Office européen des brevets**

(11) **EP 4 618 035 A1**

(12) **EUROPEAN PATENT APPLICATION**

(43) Date of publication:
**17.09.2025 Bulletin 2025/38**

(21) Application number: **25154350.0**

(22) Date of filing: **28.01.2025**

(51) International Patent Classification (IPC):
**G06V 10/764** (2022.01)   **G06V 10/82** (2022.01)
**G06V 20/64** (2022.01)   **G06V 40/16** (2022.01)

(52) Cooperative Patent Classification (CPC):
**G06V 40/165; G06V 10/764; G06V 10/82;
G06V 20/647; G06V 40/171; G06V 40/172;
G06V 40/175;** G06V 2201/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2024 US 202463565987 P
23.12.2024 US 202418999871**

(71) Applicant: **INTEL Corporation
Santa Clara, CA 95054 (US)**

(72) Inventors:
• **YUVAL, Shahar Shmuel**
 **3481511 Haifa (IL)**
• **KHOKHLOV, Maxim**
 **Santa Clara, CA, 95052 (US)**
• **LEVY, Noam**
 **Sunnyvale, CA, 94087 (US)**

(74) Representative: **Samson & Partner Patentanwälte
mbB
Widenmayerstraße 6
80538 München (DE)**

(54) **HEAD POSE ESTIMATION IN COMPUTER VISION**

(57)   Systems, apparatus, articles of manufacture, and methods are disclosed to estimate a pose of a head of a user of an electronic device. An example apparatus to estimate a head pose includes at least one processor circuit to be programmed by instructions to: identify a plurality of facial landmarks in a plurality of images; identify initial image data based on the plurality of facial landmarks; augment the initial image data with a transformation operation; and train a neural network based on the initial image data and the augmented image data to: infer three-dimensional model parameters; and infer a confidence metric.

**FIG. 1**

Processed by Luminess, 75001 PARIS (FR)

**Description**

RELATED APPLICATON

This patent claims the benefit of U.S. Provisional Patent Application No. 63/565,987, which was filed on March 15, 2024. U.S. Provisional Patent Application No. 63/565,987 is hereby incorporated herein by reference in its entirety. Priority to U.S. Provisional Patent Application No. 63/565,987 is hereby claimed.

BACKGROUND

Some electronic devices include cameras and software to estimate the pose of the head of a person relative to the camera.

BRIEF DESCRIPTION OF THE DRAWINGS

FIG. 1 is a block diagram of example head pose estimation circuitry constructed in accordance with teachings of this disclosure.

FIG. 2 illustrates an example dataset of images of example head poses.

FIG. 3 is an image with example markings identifying face landmarks.

FIG. 4 is an example coordinate grid of an example flipping transformation.

FIG. 5 is an example labeled input image.

FIG. 6 is an image with example markings of an example field of view transformation.

FIG. 7A is an image of the transformed image of FIG. 6 after an example crop and resize transformation.

FIG. 7B is an image of the transformed image of FIG. 6 after an example shift, crop, and resize transformation.

FIG. 7C is an image of the transformed image of FIG. 6 after an example field of view, crop, and resize transformation.

FIG. 7D is an image of the transformed image of FIG. 6 after an example field of view, shift, crop, and resize transformation.

FIG. 8A is an image showing an example non-face crop.

FIG. 8B is an image showing an example subface crop.

FIG. 9A is an image showing a face.

FIG. 9B is an image showing a subface.

FIG. 9C is an image showing an object that is not a face.

FIG. 10A is an image showing a face with high confidence.

FIG. 10B is an image showing a face with low confidence.

FIG. 10C is an image showing a phantom face with low confidence.

FIGS. 11-13 are flowcharts representative of example machine readable instructions and/or example operations that may be executed, instantiated, and/or performed by example programmable circuitry to implement the head pose estimation circuitry of FIG. 1.

FIG. 14 is a block diagram of an example processing platform including programmable circuitry structured to execute, instantiate, and/or perform the example machine readable instructions and/or perform the example operations of FIGS. 11-13 to implement the example head pose estimator disclosed herein.

FIG. 15 is a block diagram of an example implementation of the programmable circuitry of FIG. 14.

FIG. 16 is a block diagram of another example implementation of the programmable circuitry of FIG. 14.

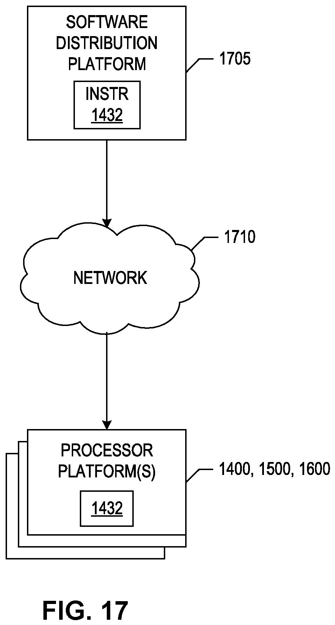

FIG. 17 is a block diagram of an example software/firmware/instructions distribution platform (e.g., one or more servers) to distribute software, instructions, and/or firmware (e.g., corresponding to the example machine readable instructions disclosed herein to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

In various applications employing computer vision, it is useful to estimate the pose of a person's head relative to the camera or some other external frame of reference. For example, in video conferencing, the head pose can be used to determine a focus of the participant's attention (e.g., what monitor they are looking at) and/or other information. If the head pose indicates that the user is not actively attentive to the content, the electronic device can, for example, dim the screen or send the system into sleep mode. If the head pose indicates that the user is attentive to the electronic device, the electronic may wake up, brighten a screen, increase a volume and/or otherwise exit a sleep or hibernation mode. In an automotive use case, data related to head pose may be used in a driver monitoring system to determine whether the user is currently looking at the road and/or is becoming sleepy or distracted.

Some electronic devices include monocular cameras that are installed to perform functions such as, for example, video conferencing. Head pose estimation from video captured using such monocular cameras presents challenges because detection is not stable when the distance between the face of the user and the camera is changing. In addition, conventional devices do not produce or provide an indication of confidence levels related to the estimated head pose.

Other known facial tracking algorithms rely on detection of facial landmarks from which head pose is estimated. Such approaches fail when heads are posed at extreme pose angles relative to a camera and/or when the subject's face is partially occluded (e.g. when wearing sunglasses). Also, some known algorithms do not effectively discern faces from other objects in the background and, therefore, expend resources tracking non-face objects.

Disclosed herein are example systems, methods, and articles or manufacture for estimating head pose from images in, for example, computer vision applications. In the context of this disclosure, an "image" is a still image, a series or other plurality of still images, and/or a video. Images can be captured or recorded earlier in time, in real time (e.g., a stream) and/or in substantially real time. The term "frame" may be used interchangeably with image.

Examples disclosed herein estimate and track facial landmarks, which are used, in conjunction with a confidence metric, to track the head pose and provide a robust estimation usable in a wide range of products. In addition, disclosed herein are example training algorithms that use data augmentation to further enhance the robustness of the head pose estimation. Examples disclosed herein can track and estimate head pose as a user's head moves with respect to the camera in any direction. Examples disclosed herein also indicate when non-face objects and/or phantom faces are identified to avoid expenditure of resources tracking and/or estimating the position of non-face objects. Phantom faces occur when indicators of facial landmarks are placed over or associated with objects in images that are not faces.

Examples disclosed herein estimate head pose in an image indirectly by first extracting facial geometry from the image. In some examples, landmarks and/or a 3D morphable model ("3DMM") are fit to the image data. 3DMM is a model that indicates the shape and texture of objects such as, for example, faces. Parameters from the model are transformed relative to a front-facing head-pose to derive pose angles. In some examples, to fit such models directly and accurately, algorithms based on teacher-student approaches train a lightweight convolutional neural network (CNN) based on annotations of a higher fidelity alignment framework or model such as, for example, a 3D Dense Face Alignment (3DDFA). Examples disclosed herein can be run on a resource constrained hardware accelerator, such as a graphics processing unit (GPU), a vision processing unit (VPU), and/or other processing circuitry and/or platform.

In addition, examples disclosed herein can be leveraged for (e.g., continuous) head pose tracking throughout a video stream. Also, examples disclosed herein handle variations in head pose region of interest (ROI) and deliver stable pose and landmark estimates even when the face crop varies from image to image. Examples disclosed herein recover from face drift and or loss of face in an image. In addition, examples disclosed herein can track multiple faces simultaneously. Examples disclosed herein may also be used to reject phantom faces.

Examples disclosed herein include an augmentation pipeline, a confidence metric, and landmark-based tracking for the head pose estimation. In some examples, a computationally heavy but reliable offline algorithm is used for labeling image data, fitting a 3DMM, and determining fitting loss/error information. In some examples, a lightweight neural network is used to generate the 3DMM coefficients in a teacher-student approach, with the images labeled by the offline fitting algorithm as ground truth. In some examples, a preset and/or proprietary dataset is captured, obtained, received, and/or otherwise accessed that covers a wide range of head pose variations to which the above-mentioned model-fitting algorithm is applied to generate labels. In some examples, fitting results that exhibit excessive fitting loss are automatically filtered out. In some examples, the fitting results are augmented to account for region of interest (ROI) fluctuations such as, for example, shifts, field of view changes, resolution changes, etc. In some examples, the image and the 3DMM parameters are simultaneously modified to achieve consistent new training datum.

In some examples, a confidence metric is computed that determines and/or indicates whether the ROI and/or an object within the ROI is a face. This confidence metric is, in some examples, also based on augmentation data for the high confidence scenarios and low confidence scenarios. The confidence metric is usable for frame-to-frame tracking of the evolution of the head pose. In addition, the confidence metric can be used to prevent tracking and analysis of non-face ROIs.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Once training is complete, the model is deployed for use as an executable construct that processes an input and provides an output based on the network of nodes and connections defined in the model.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes preprocessing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

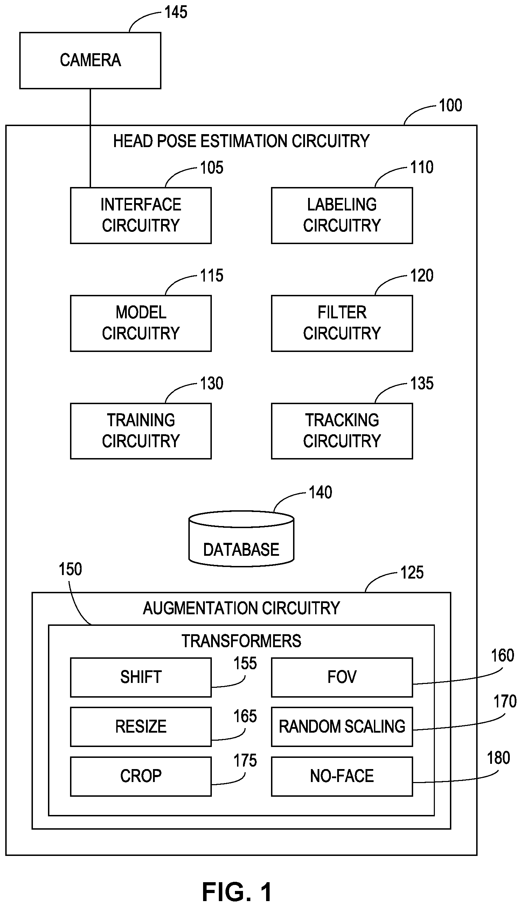

FIG. 1 illustrates example head pose estimation circuitry 100 that may be implemented, programmed, configured, structured, and/or other usable for estimating the pose of a head of a subject in, for example, computer vision applications. The head pose estimate circuitry 100 includes example interface circuitry 105, example labeling circuitry 100, example model circuitry 115, example filter circuitry 120, example augmentation circuitry 125, example training circuitry 130, example tracking circuitry 135, and an example database 140.

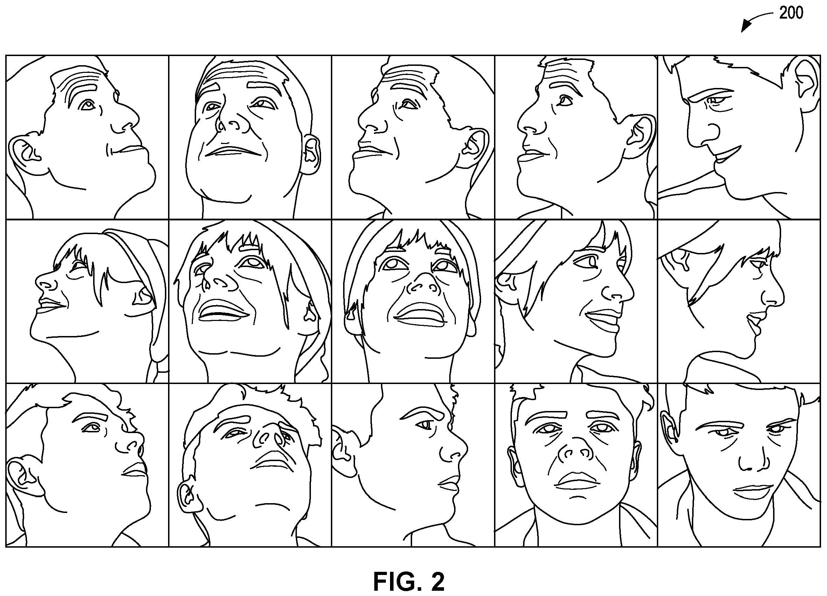

Through the interface circuitry 105, the head pose estimation circuitry 100 obtains, receives, retrieves, and/or otherwise accesses an example dataset 200 (FIG.2) that includes a plurality of images. The plurality of images form and/or include initial image data. The dataset 200 may be accessed from a camera 145 as shown in the example of FIG. 1 or from another source such as an external memory. The dataset 200 of this example includes images of different subjects with their heads orientated in different poses. In some examples, the dataset 200 includes subjects with head poses in a full range of rotations. The full range of rotations, in this example, includes movement through the full range of motion for roll, pitch, and yaw. The dataset 200 is used to train one or more models (e.g., one or more neural networks) disclosed herein. In addition, in some examples, the dataset 200 is not static and is updatable as the models disclosed are re-trained. For example, the details disclosed herein related to the functionality of the labeling circuitry 110, model circuitry 115, filter circuitry 120, augmentation circuitry 125, and training circuitry 130 that may be used in the inference phase of the model and/or neural network may create additional data for use in a further training phase of the model. The head pose estimation circuitry 100 can locally store the dataset 200 in the database 140.

The interface circuitry 105 accesses one or more images of a subject for which the head pose estimate circuitry 100 is to estimate head pose. The images can come directly from the camera 145 and/or from an external database. The subject may be, for example, an individual using an electronic device such as a computer, an individual operating a machine, an individual watching a television, etc. The image may be captured by the camera 145 associated with the electronic device or other camera such as, for example, a webcam, a dashcam, etc.

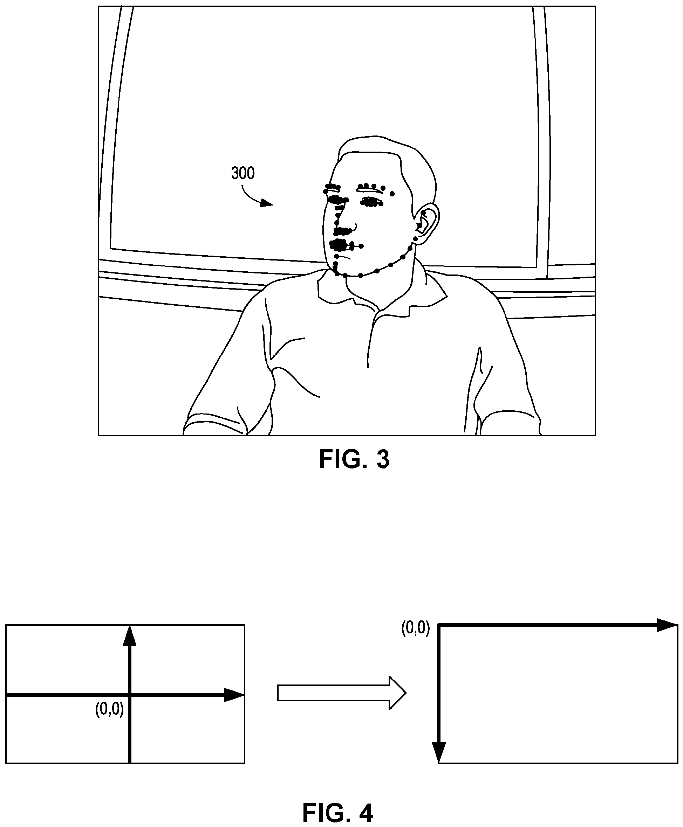

The labeling circuitry 110 identifies a face bounding box in the image of the subject and identifies facial landmarks within the face bounding box. In some examples, the facial landmarks are marked in the image to create a face mesh. In some examples, the labeling circuitry 110 extracts preliminary 2D landmarks from the face, such as a 68-point representation. The 2D landmarks in some such examples have known equivalent vertices on the 3D mesh. An example face mesh 300 is shown in FIG. 3. The labeling circuitry 110 generates a labeled dataset related to the image of the subject based on the facial landmarks identified in the image of the subject and the stored dataset 200.

The model circuitry 115 implements a model such as a 3DMM. With the 3DMM, the model circuitry 115 parameterizes the face mesh using a low-dimensional linear subspace representation, where:

$$Vertices = \begin{pmatrix} X \\ Y \\ X \end{pmatrix} = B\alpha$$

Vertices is a $3 \times N_{verts}$ matrix and represents all vertices within the face point cloud and mesh. $\alpha$ is a $N_{coeffs}$-element vector representation of the face that can include both identity and expression information. B is the $3 \times N_{vertx} \times N_{coeffs}$ basis tensor mapping the low dimensional representation to vertices.

Given the above point cloud, the face coordinates can be mapped to world coordinates via rigid transformation:

$$\begin{pmatrix} X_w \\ Y_w \\ Z_w \end{pmatrix} = R \begin{pmatrix} X \\ Y \\ X \end{pmatrix} + T$$

The transformation matrix R encapsulates the head rotation (the "pose") and can be decomposed into angles. To fit this 3D representation, the model circuitry 115 projects the 3D vertices onto a 2D image. Using homogeneous coordinates, this process can be represented more generally as:

$$\begin{pmatrix} x \\ y \\ z \\ w \end{pmatrix} = T_{ROI} T_{flip} P_{projection} A \begin{pmatrix} X \\ Y \\ Z \\ 1 \end{pmatrix}$$

The variable A is a 3x4 affine transformation matrix encapsulating scale, translation, and rotation:

$$A = \begin{pmatrix} a_{11} & a_{12} & a_{13} & a_{14} \\ a_{21} & a_{22} & a_{23} & a_{24} \\ a_{31} & a_{32} & a_{33} & a_{34} \\ 0 & 0 & 0 & 1 \end{pmatrix}$$

An affine layer is a layer in a neural network where each input is connected to each output by a learnable weight. Affine layers are used to transform input features into outputs that the network can use for prediction or classification tasks. $T_{flip}$ is an in-plane transformation that converts the coordinates to image convention (top-to-bottom y-axis, origin at the top-left).

$$T_{flip} = \begin{pmatrix} 1 & 0 & 0 & 0.5 \\ 0 & -1 & 0 & 0.5 \\ 0 & 0 & 1 & 0 \\ 0 & 0 & 0 & 1 \end{pmatrix}$$

An example of the coordinate grid flipping transformation is shown in FIG. 4.

$T_{ROI}$ converts a unit-sized project face ROI to the dimensions and position of the face bounding box within the 2D image:

$$T_{ROI} = \begin{pmatrix} W_{BB} & 0 & 0 & x_0 \\ 0 & H_{BB} & 0 & y_0 \\ 0 & 0 & 1 & 0 \\ 0 & 0 & 0 & 1 \end{pmatrix}$$

Assuming a weak-orthographic projection, the projection matrix is:

$$P_{projection} = \begin{pmatrix} 1 & 0 & 0 & 0 \\ 0 & 1 & 0 & 0 \\ 0 & 0 & 1 & 0 \\ 0 & 0 & 0 & 1 \end{pmatrix}$$

Thus, the overall representation includes: $\{(x_0, y_0, W_{BB}, H_{BB}), A, \alpha\}$. This is equally applicable in the case of a full perspective transformation.

The model circuitry 115 applies analysis-by-synthesis optimization to fit a 3DMM model. To fit the model, the model circuitry 115 reprojects 3D landmarks to the initial 2D annotations and produces a rendered image (using an illumination and texture model of the face) with a minimal photometric loss relative to the input imageface. In some examples, the model circuitry 115 employs coefficient shrinkage regularization to ensure incorrect local minimum matches are avoided. The loss of the algorithm can be expressed as:

$$L_{total} = \alpha_1 L_{landmarks} + \alpha_2 L_{photo} + \alpha_3 \|\alpha\| + \cdots$$

The filter circuitry 120 rejects fits with excessive and/or the largest losses to eliminate outlier data. The resulting dataset is used for fitting a neural network (e.g., a CNN) that learns to estimate the above coefficients.

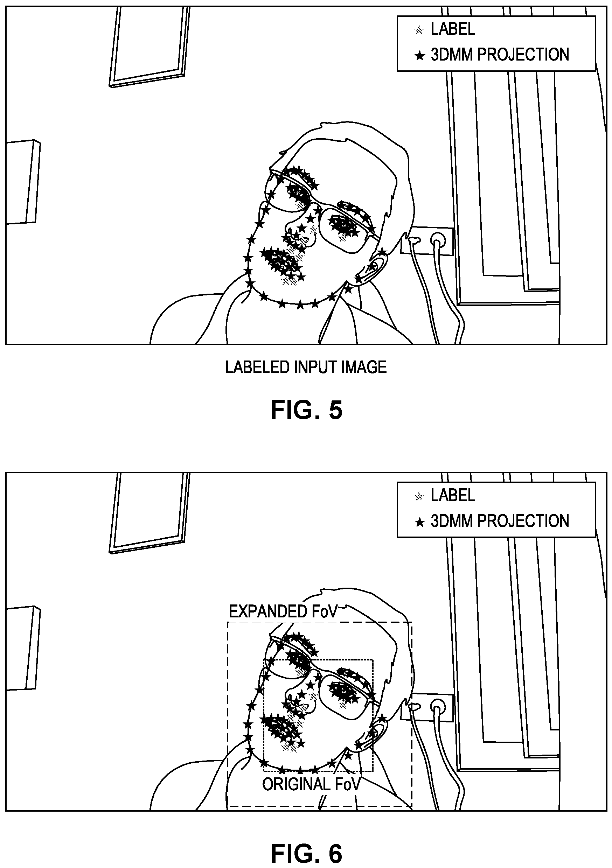

In some examples, the model circuitry 115 estimates head pose in encoded 3DMM parameters: rotation, translation, and non-rigid features. The model circuitry 115 uses the 3DMM model as a decoder layer and the generated coefficients to regenerate the 3D face and to compute 2D facial landmarks of an arbitrary input face. FIG. 5 is an example labeled input image produces after the model circuitry 115 fits the model.

In some examples, the ROI fluctuates across multiple frames or images. For example, the image or subject can shift, the field of view can change, the resolution can change, etc. The augmentation circuitry 125 employs augmentation transformers 150 to generate more diverse data and reduce variance of the head pose estimation when the input ROI varies across images. Transformers 150 also are referred to as transformation operations or augmentation operations. The transformers 150 are used to modify images and/or labels. The augmentation circuitry 125 synchronously modifies the image ROI and the associated labels (face ROI in image, 3DMM rigid parameters, and landmarks), and employs the transformers 150 disclosed herein to produce new labeled data. In some examples, some of the transformers 150 do not require modification of the image and only the labels (e.g., face ROI, affine parameter, and/or landmark) are modified. Table 1 illustrates examples of such side effects to the transformers 150.

TABLE 1

| Augmentation Transformer 150 | Face ROI Modification? | Affine Parameter Modification? | Landmark Modification? | Image Modification? |
|---|---|---|---|---|
| Shift 155 | Yes | Yes | Yes | No |
| Field of View (FOV) 160 | Yes | Yes | Yes | No |
| Resize 165 | Yes | No | No | Yes |
| Random Scaling 170 | Yes | No | No | Yes |

(continued)

| Augmentation Transformer 150 | Face ROI Modification? | Affine Parameter Modification? | Landmark Modification? | Image Modification? |
|---|---|---|---|---|
| Crop 175 | Yes | No | No | Yes |

The shift transformer 155 includes:

$$T_{ROI_{new}} = \begin{pmatrix} W_{BB} & 0 & 0 & x_0 + dx \\ 0 & H_{BB} & 0 & y_0 + dy \\ 0 & 0 & 1 & 0 \\ 0 & 0 & 0 & 1 \end{pmatrix}$$

Given a shift in ROI, the augmentation circuitry 125 retains landmark positions in image coordinates:

$$T_{ROI} T_{flip} P_{proj} A = T_{ROI_{new}} T_{flip} P_{proj} A_{new}$$

$$T_{ROI} T_{flip} A = T_{ROI_{new}} T_{flip} A_{new}$$

$$A_{new} = T_{flip}^{-1} T_{ROI_{new}}^{-1} T_{ROI} T_{flip} A$$

Absolute landmark positions are unaffected by the shift transformer 155 because the effects of $T_{ROI\text{-}new}$ and $A_{new}$ cancel each other out. The image also not affected by the shift transformer 155, because the shift transformer 155 merely manipulates the labels, but the image is not yet cropped.

With respect to a field of view (FOV) transformer 160, the augmentation circuitry 125 scales the field of view, as shown in FIG. 6. Scaling the field of view increases the size of the ROI bounding box by a (random) factor s:

Original ROI: (x0, y0, w, h)
Expanded ROI: (x0-(s-1)/2·w, y0-(s-1)/2·h, s·w, s·h)

The original and expanded ROIs define corresponding $T_{ROI}$ and $T_{ROI\text{-}new}$ matrices. The affine parameter modification formula is the same as for the shift transformer 155:

$$A_{new} = T_{flip}^{-1} T_{ROI_{new}}^{-1} T_{ROI} T_{flip} A$$

Absolute landmark positions are also not affected, and neither is the input image with the field of view transformer 160.

When implementing the resize transformer 165 the augmentation circuitry 125 applies a fixed target resolution and computes the scale factor. With the random scaling transformer 170, the augmentation circuitry 125 applies a random scaling factor to the input image. Both the resize transformer 165 and the random scaling transfer 170 have similar operation:

$$s_x = \frac{W_{out}}{W_{in}}; \ s_y = \frac{H_{out}}{H_{in}}$$

$$I_{out} = resize\left(I_{in}, [W_{out}, H_{out}]\right)$$

$$T_{ROI_{new}} = \begin{pmatrix} s_x W_{BB} & 0 & 0 & s_x x_0 \\ 0 & s_y H_{BB} & 0 & s_y y_0 \\ 0 & 0 & 1 & 0 \\ 0 & 0 & 0 & 1 \end{pmatrix}$$

Landmarks are also scaled by $s_x$ and $s_y$, respectively. Affine parameters are unaffected, because the ROI transform encapsulates the absolute size.

When implementing the crop transformer 175, the augmentation circuitry 125 consolidates the effects of shifts and field of view manipulations and extracts the actual image ROI.

The augmentation circuitry 125 also implements a no-face transformer 180 to identify when an object in an image is not a face, as disclosed in more detail below. The augmented data can be used to further train the model. In addition, use of the augmented data reduces errors in landmark identification. In some examples, the different augmentation transformers 155 can be cascaded. Cascading the transformers 150 is a sequence of augmentation operations (transformers) applied to the image, the labels, or both. The ordering of the transformers 150 is flexible. There may be additional transformers 150 (e.g., rotation, in-plane rotation, etc.) that are implemented for modification of images and/or labels in addition to or as an alternative to the transformers 150 disclosed above.

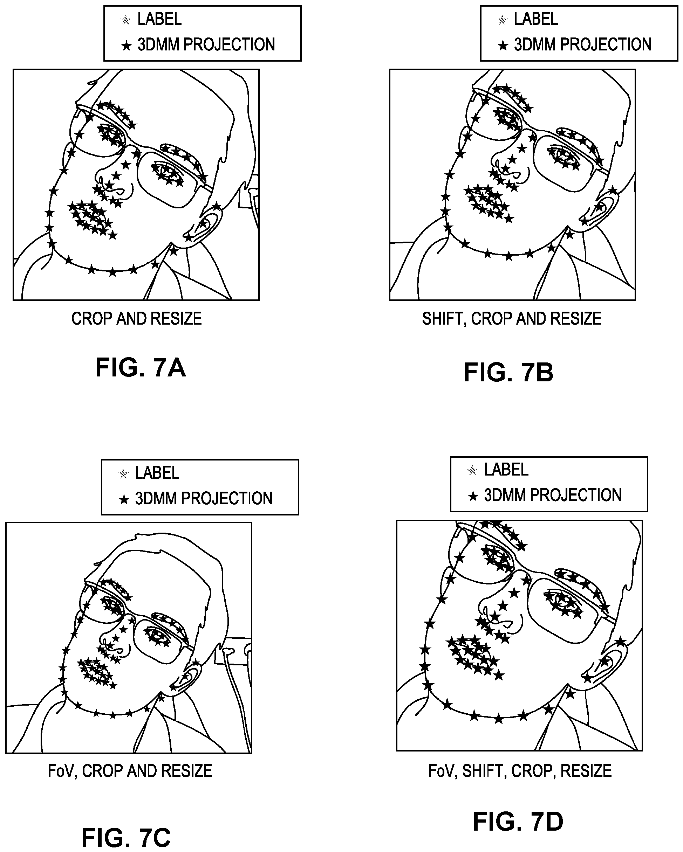

FIG. 7A is an image of the labeled input image of FIG. 5 after an example crop and resize transformation. FIG. 7B is an image of the labeled input image of FIG. 5 after an example shift, crop, and resize transformation. FIG. 7C is an image of the labeled input image of FIG. 5 after an example field of view, crop, and resize transformation. FIG. 7D is an image of the labeled input image of FIG. 5 after an example field of view, shift, crop, and resize transformation.

The training circuitry 130 implements example training stages or procedures including pose training and confidence training to train the model. With pose training, the training circuitry 130 trains the neural network to learn to predict the 3DMM parameters including pose, identity, and expression. The purpose of the pose training is to achieve minimal reconstruction error of the 3DMM. The pose training and the labeled images after one or more of the transformation operations 150 are used to create a larger dataset with images that show a face and images that do not show a face, which can be used for confidence training. The training circuitry 130 implements different loss functions during the pose training. Example loss functions include:

$$Mean\ Square\ Error\ Loss: \mathcal{L} = \frac{1}{N}\|\hat{c} - c\|$$

$$Vertex - Distance\ Loss: \mathcal{L} = \frac{1}{N}\|\widehat{p_{3d}} - p_{3d}\|$$

$$Reprojected\ Landmark\ Loss: \mathcal{L} = \frac{1}{N}\|\widehat{p_{2d}} - p_{2d}\|$$

$$Regularization: \mathcal{L} = \frac{1}{N}\|\hat{c}\|$$

$$\widehat{p_{3d}} = 3DMM(\hat{c})$$

Where $\hat{c}$ is the model output and $\widehat{p_{2d}}$ is the reprojected landmarks. The training circuitry 130 exposes the model to corresponding image crops and 3DMM parameters. The losses penalize 3DMM parameter consistency as well as geometric consistency of the landmarks and 3D vertices generated by plugging the ground-truth (the labeled image data) and estimate 3DMM model parameters into the 3DMM model and generating 3D vertices.

With confidence training, the training circuity 130 determines or learns a confidence metric. The confidence metric is an indication of the likelihood that an image or an ROI within an image includes a face. In some examples, the confidence metric is expressed qualitatively (e.g., high or low). In some examples, the confidence metric is expressed in binary terms (e.g., 0 or 1). For example, high confidence that an image or ROI includes a face may have a confidence metric of 1. Likewise, low confidence that an image or ROI includes a face may have a confidence metric of 0. In some examples, if an image or ROI includes only a portion of a face, from which head pose cannot accurately or consistently be determined, the confidence metric for that image or ROI may be 0. In some examples, the training circuitry 130 implements loss functions during the confidence training. An example loss function is binary cross-entropy loss:

$$l\,(x,y) = L - \{l_1, \dots, l_N\}^T, l_n = -w_n\,[y_n \times \log\sigma\,(x_n) + (1 - y_n)\,\times \log(1 - \sigma\,(x_n))]$$

High and low confidence examples are generated based on the no-face augmentation transformer 180, described below.

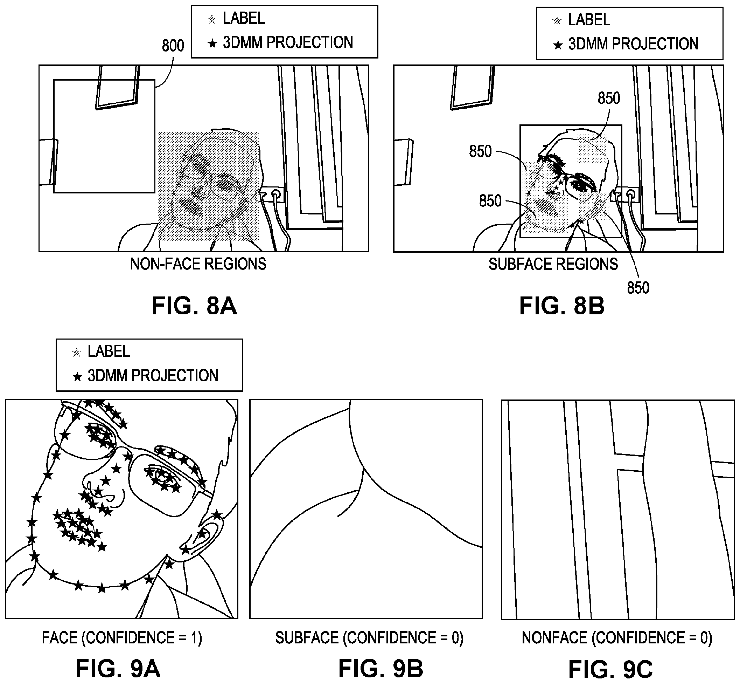

The head pose estimation circuitry 100 uses the confidence metric to reject spurious face detections. For example, background objects in an image may be detected as a face and/or a subface (i.e., parts of a face such as a chin and/or a forehead) are detected as a new face. In some examples, the training circuitry 130 implements the no-face transformer 180) to generate datasets for training the model. For example, FIGS. 8A and 8B show an image of a face. The training circuitry 130 implements the no-face transformer 180 to crop the area 800 of FIG. 8A, which is an ROI that does not include a face. The training circuitry 130 implements the no-face transformer 180 to crop the areas 850 of FIG. 8B, which are portions of a face, or subface.

The training circuitry 130 uses 0 and 1 labels to determine or define the confidence metric based on the image or ROI showing a face. For example, FIG. 9A shows a face and has a confidence metric of 1. FIG. 9B shows a subface (e.g., a chin) and has a confidence metric of 0. FIG. 9C shows background (a portion of a window and curtains) and not a face and has a confidence metric of 0.

After the model is trained and the confidence metric is determined, the tracking circuitry 135 is used to track faces across frames. When the pose confidence metric is low, the head pose estimation circuitry 100 declares track loss and drops the face from further tracking. In the absence of such a metric, frame-to-frame landmark tracking may drift to non-face ROIs, which would unintentionally expend computing resources.

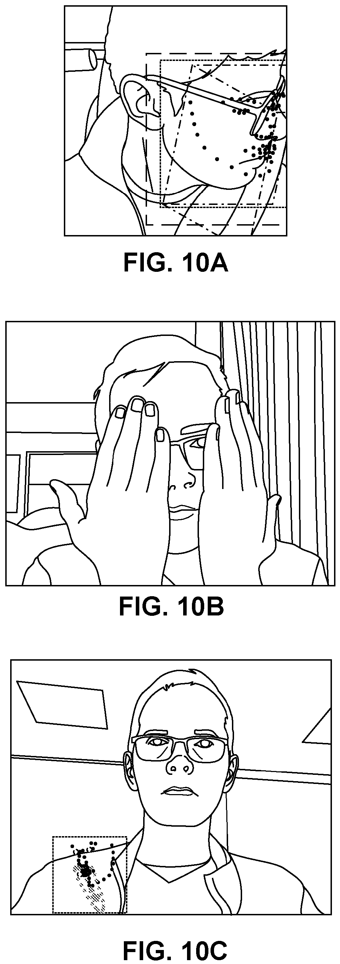

FIGS. 10A-10C show more example images that are analyzed for head pose estimation. FIG. 10A is an image showing a face with high confidence. The tracking circuitry 135 tracks the face across frames to determine the head pose. The bounding box provides estimations of where the face is expected to be positioned in the following frame. FIG. 10B is an image showing a face with low confidence because the face is occluded. The head pose estimation circuitry 100 would declare pose loss, and the tracking circuitry 135 would not track the face further. FIG. 10C is an image showing a phantom face is identified in an area that is not a face. Thus, the confidence metric for the image of FIG. 10C is low confidence. The head pose estimation circuitry 100 would declare pose loss, and the tracking circuitry 135 would not track the face further.

FIG. 1 is a block diagram of an example implementation of the head pose estimation circuitry 100 to estimate the pose of a head of a subject. The head pose estimation circuitry 100 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the head pose estimation circuitry 100 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

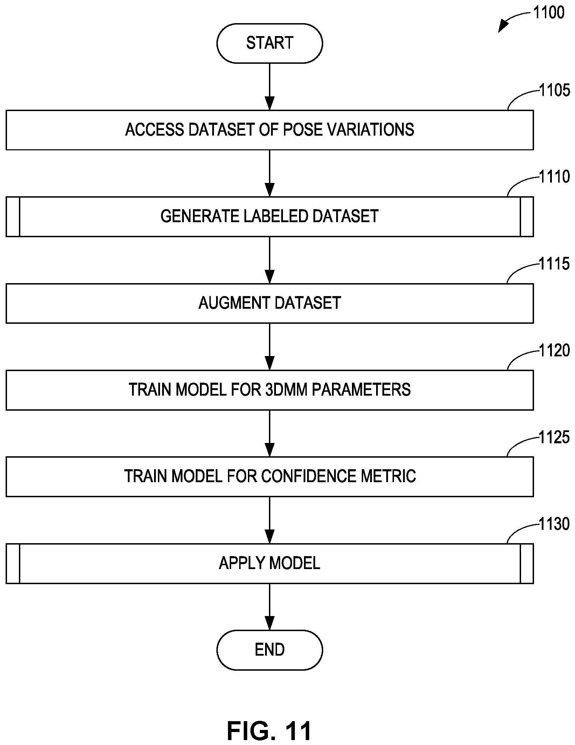

In some examples, the interface circuitry 105 is instantiated by programmable circuitry executing interface instructions and/or configured to perform operations such as those represented by the flowchart(s) of FIGS. 11-13. In some examples, the labeling circuitry 110 is instantiated by programmable circuitry executing labeling instructions and/or configured to perform operations such as those represented by the flowchart(s) of FIGS. 11-13. In some examples, the model circuitry 115 is instantiated by programmable circuitry executing modeling instructions and/or configured to perform operations such as those represented by the flowchart(s) of FIGS. 11-13. In some examples, the filter circuitry 120 is instantiated by programmable circuitry executing filtering instructions and/or configured to perform operations such as those represented by the flowchart(s) of FIGS. 11-13. In some examples, the augmentation circuitry 125 is instantiated by programmable circuitry executing augmentation instructions and/or configured to perform operations such as those represented by the flowchart(s) of FIGS. 11-13. In some examples, the training circuitry 130 is instantiated by programmable circuitry executing training instructions and/or configured to perform operations such as those represented by the flowchart(s) of FIGS. 11-13. In some examples, the tracking circuitry 135 is instantiated by programmable circuitry executing tracking instructions and/or configured to perform operations such as those represented by the flowchart(s) of FIGS. 11-13.

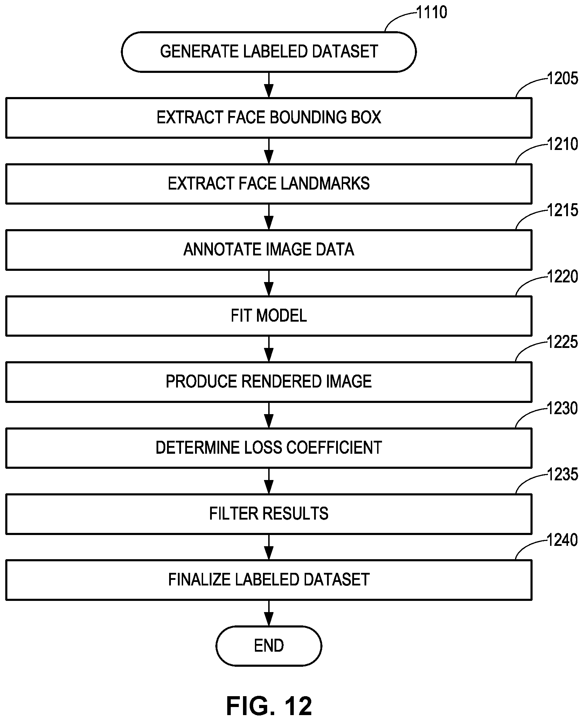

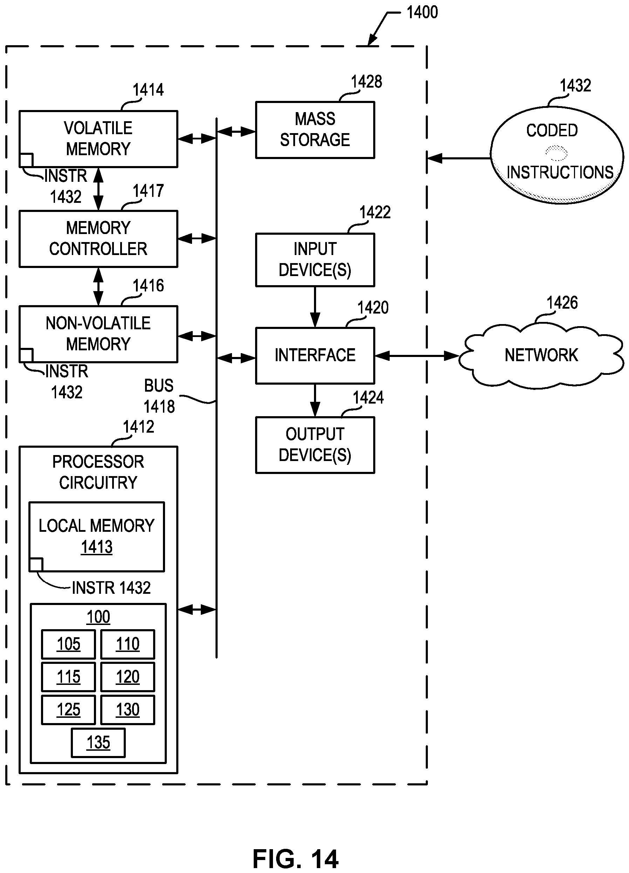

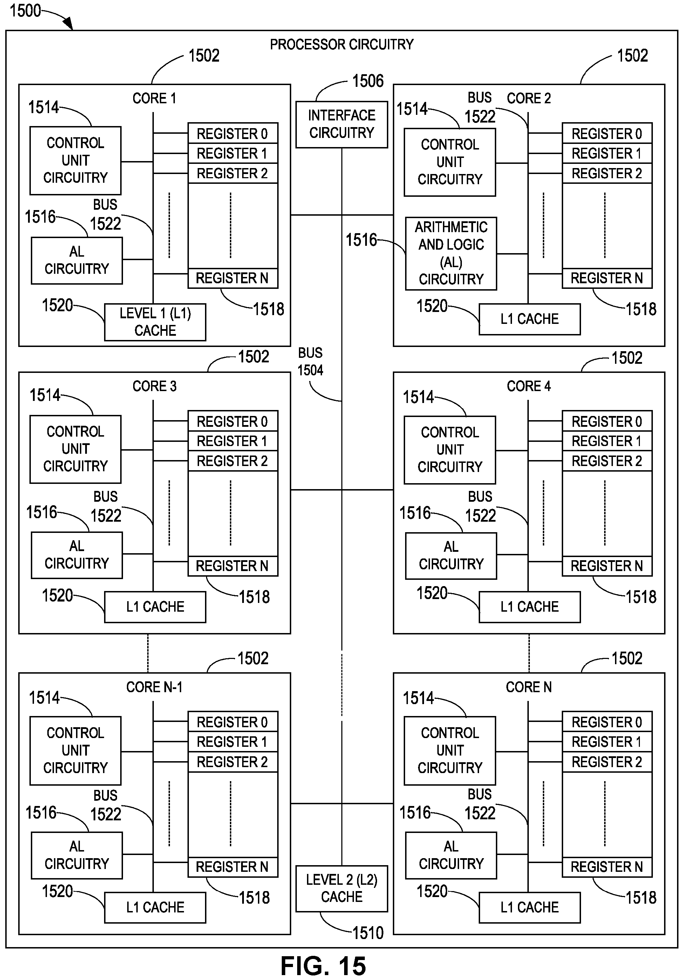

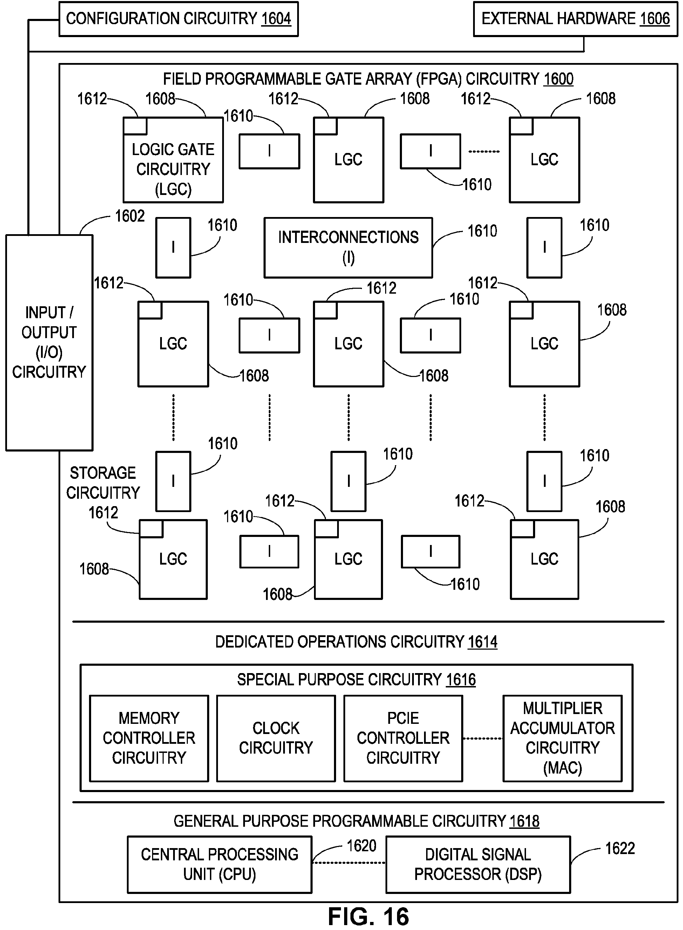

In some examples, the head pose estimation circuitry 100 includes means for labeling images. For example, the means for labeling may be implemented by the labeling circuitry 110. In some examples, the labeling circuitry 110 may be instantiated by programmable circuitry such as the example programmable circuitry 1412 of FIG. 14. For instance, the labeling circuitry 110 may be instantiated by the example microprocessor 1500 of FIG. 15 executing machine executable instructions such as those implemented by at least blocks 1110 of FIGS. 11 and 12. In some examples, the labeling circuitry 110 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the labeling circuitry 110 may be instantiated by any other combination of hardware, software, and/or firmware. For example, the labeling circuitry 110 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the head pose estimation circuitry 100 includes means for augmenting a dataset. For example, the means for augmenting may be implemented by the augmentation circuitry 125. In some examples, the I augmentation circuitry 125 may be instantiated by programmable circuitry such as the example programmable circuitry 1412 of FIG. 14. For instance, the augmentation circuitry 125 may be instantiated by the example microprocessor 1500 of FIG. 15 executing machine executable instructions such as those implemented by at least blocks 1115 of FIG. 11. In some examples, the augmentation circuitry 125 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the augmentation circuitry 125 may be instantiated by any other combination of hardware, software, and/or firmware. For example, the augmentation circuitry 125 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the head pose estimation circuitry 100 includes means for training a model. For example, the means for training may be implemented by the training circuitry 130. In some examples, the training circuitry 130 may be instantiated by programmable circuitry such as the example programmable circuitry 1412 of FIG. 14. For instance, the training circuitry 130 may be instantiated by the example microprocessor 1500 of FIG. 15 executing machine executable instructions such as those implemented by at least blocks 1120, 1125 of FIG. 11. In some examples, the training circuitry 130 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the training circuitry 130 may be instantiated by any other combination of hardware, software, and/or firmware. For example, the training circuitry 130 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

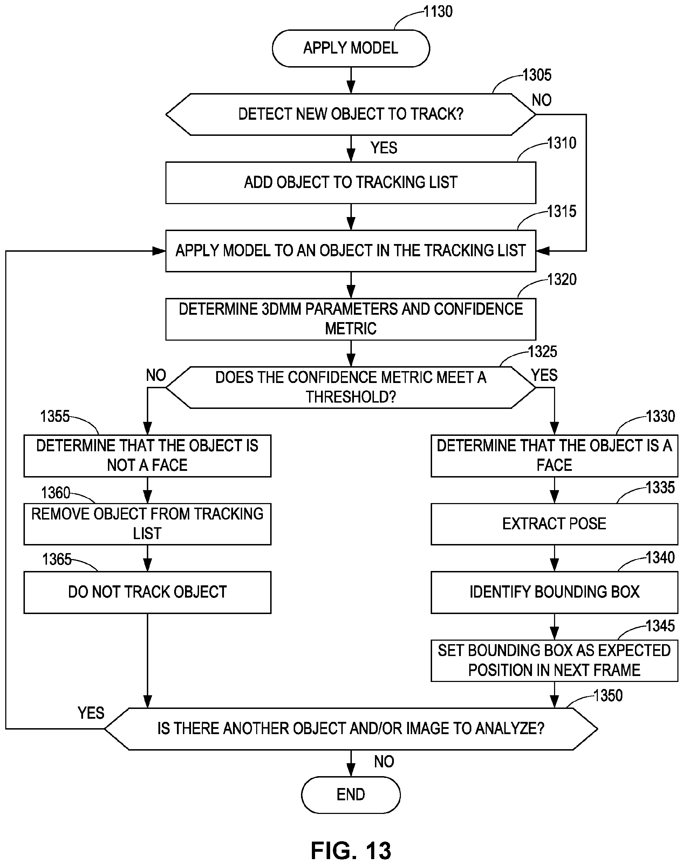

In some examples, the head pose estimation circuitry 100 includes means for apply the model. For example, the means for applying may be implemented by the tracking circuitry 135. In some examples, the tracking circuitry 135 may be instantiated by programmable circuitry such as the example programmable circuitry 1412 of FIG. 14. For instance, the tracking circuitry 135 may be instantiated by the example microprocessor 1500 of FIG. 15 executing machine executable instructions such as those implemented by at least blocks 1130 of FIGS. 11 and 13. In some examples, the tracking circuitry 135 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the tracking circuitry 135 may be instantiated by any other combination of hardware, software, and/or firmware. For example, the tracking circuitry 135 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the head pose estimation circuitry 100 of FIG. 1 is illustrated in FIG. 1, one or more of the elements, processes, and/or devices illustrated in FIG. 1 may be combined, divided, rearranged, omitted, eliminated, and/or implemented in any other way. Further, the example interface circuitry 105, the example labeling circuitry 110, the example model circuitry 115, the example filter circuitry 120, the example augmentation circuitry 125, the example training circuitry 130, the example tracking circuitry 135, the database 140, and/or, more generally, the example head pose estimation circuitry 100 of FIG. 1, may be implemented by hardware alone or by hardware in combination with software and/or firmware. Thus, for example, any of the example interface circuitry 105, the example labeling circuitry 110, the example model circuitry 115, the example filter circuitry 120, the example augmentation circuitry 125, the example training circuitry 130, the example tracking circuitry 135, the database 140, and/or, more generally, the example head pose estimation circuitry 100, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example head pose estimation circuitry 100 of FIG. 1 may include one or more elements, processes, and/or devices in addition to, or instead of, those illustrated in FIG. 1, and/or may include more than one of any or all of the illustrated elements, processes and devices.

Flowchart(s) representative of example machine readable instructions, which may be executed by programmable circuitry to implement and/or instantiate the head pose estimation circuitry 100 of FIG. 1 and/or representative of example operations which may be performed by programmable circuitry to implement and/or instantiate the head pose estimation circuitry 100 of FIG. 1, are shown in FIGS. 11-13. The machine readable instructions may be one or more executable programs or portion(s) of one or more executable programs for execution by programmable circuitry such as the programmable circuitry 1412 shown in the example processor platform 1400 discussed below in connection with FIG. 14 and/or may be one or more function(s) or portion(s) of functions to be performed by the example programmable circuitry (e.g., an FPGA) discussed below in connection with FIGS. 15 and/or 16. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 11-13, many other methods of implementing the example head pose estimation circuitry 100 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 11-13 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 11 is a flowchart representative of example machine readable instructions and/or example operations 1100 that may be executed, instantiated, and/or performed by programmable circuitry to estimate a pose of a head in an image. The example machine-readable instructions and/or the example operations 1100 of FIG. 11 include the interface circuitry 105 access a dataset of head pose variations (block 1105). An example dataset 200 is shown in FIG. 2.

The label circuitry 110 generates a labeled dataset (block 1110). An example of the process for generating the labeled dataset (block 1110) is shown in FIG. 12. The augmentation circuitry 125 augments the dataset (block 1115). For example, the augmentation circuitry 125 implements one or more transformation operations to generate additional images.

The training circuitry 130 trains the model based on the labeled dataset and the augmented dataset for 3DMM parameters (block 1120). For example, the training circuitry 130 trains the model for pose, expression, and identity. The training circuitry 130 also trains the model to determine a confidence metric (block 1125). Based on the trained model and the confidence metric, the head pose estimation circuitry 100 applies the model (block 1130). An example of the process for applying the model (block 1130) is shown in FIG. 13.

FIG. 12 illustrates an example of generating the labeled dataset (block 1110). The labeling circuitry 110 extracts a face bounding box in an image to be analyzed (block 1205). The labeling circuitry 110 extract face landmarks of a face within the bounding box (block 1210). The labeling circuitry 110 annotated the image data (block 1215) based on the extracted face landmarks.

The model circuitry 115 fits the model based on the annotated image data (block 1220). The model circuitry 115 produces a rendered image (block 1225). The head pose can be estimated based on the rendered image as disclosed herein. The model circuitry 115 determines the loss coefficient (block 1230). The results with larger loss are filtered by the filter circuitry 120 (block 1235). The labeling circuitry 110 finalizes the labeled dataset after the results are filtered (block 1235).

FIG. 13 illustrates an example of applying the model (block 1130). The head pose estimation circuitry 110 determines if there is a new object to track (block 1305). For example, the head pose estimation circuitry 100 determines if an image might include a face. In some examples, a separate face detection algorithm or application is used to identify if there is a face in an image. The head pose estimation circuitry 100 receives the indication of a potential face to track via the interface circuitry 105. Thus, in some examples, the operations for applying the model 1130 do not include determining if there is a new object (e.g., a face) to track. Rather, in such examples, the head pose estimation circuitry 100 determines whether the received indication of a face from the outside algorithm is a plausible face and is rejected if the confidence criterion is not met, as further disclosed herein. If and/or when the head pose estimation circuitry 100 determines that there is a new object to track (block 1305: YES), the head pose estimation circuitry 100 adds the object to a tracking list (block 1310). The head pose estimation circuitry 100 and the model circuitry 115 then applies the pose estimation model to an object in the tracking list (block 1315). Also, if and/or when the head pose estimation circuitry 110 determines that there is not a new object to track (block 1305: NO), the head pose estimation circuitry 100 and the model circuitry 115 proceeds to apply the pose estimation model to an object in the tracking list (block 1315).

The model circuitry 115 determines 3DMM parameters of the object and a confidence metric (block 1320). The model circuitry 115 determines if the confidence metric satisfies or meets a threshold (block 1325). If and/or when the model circuitry 115 determines that the confidence metric meets the threshold (block 1325: YES), the model circuitry 115 determines that the object in the image is a face (block 1330). The model circuitry 115 extracts the head pose (block 1330). For example, the model circuitry 115 estimates the pose based on the rendered image (e.g., block 1225, FIG. 12). In some examples, the model circuitry 115 estimates the pose as encoded 3DMM parameters: rotation, translation, and non-rigid features.

The tracking circuitry 135 identifies a bounding box in or for the image (block 1340). The tracking circuitry 135 sets the box as the expected position of the head in the next or subsequent image or frame (block 1345). The head pose estimation circuitry 100 determines if there is another object and/or image to analyze (block 1350). If there is another object to analyze (block 1350: YES), the process 1130 continues with the model circuitry 115 applying the model to an object in the tracking list (block 1315).

If and/or when the model circuitry 115 determines that the confidence metric does not meet the threshold (block 1325: NO), the model circuitry 115 determines that the object in the image is not a face (block 1355). The head pose estimation circuitry 100 removes the object from the tracking list or otherwise precludes tracking of the object (block 1360). The tracking circuitry 135 does not track the object (block 1365). The head pose estimation circuitry 100 determines if there is another object and/or image to analyze (block 1350). If there is another object to analyze (block 1350: YES), the process 1130 continues with the model circuitry 115 applying the model to an object in the tracking list (block 1315), as noted above. If there is not another object to analyze (block 1350: NO), the example process 1130 ends.

FIG. 14 is a block diagram of an example programmable circuitry platform 1400 structured to execute and/or instantiate the example machine-readable instructions and/or the example operations of FIGS. 11-13 to implement the head pose estimation circuitry 100 of FIG. 1. The programmable circuitry platform 1400 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, DSPs, and/or microcontrollers from any desired family or manufacturer. The programmable circuitry 1412 may be implemented by one or more semiconductor based (e.g., silicon based) devices. In this example, the programmable circuitry 1412 implements the head pose estimation circuitry 100, the interface circuitry 105, the labeling circuitry 110, the model circuitry 115, the filter circuitry 120, the augmentation circuitry 125, the training circuitry 130, and the tracking circuitry 135.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1432, which may be implemented by the machine readable instructions of FIGS. 11-13, may be stored in the mass storage device 1428, in the volatile memory 1414, in the non-volatile memory 1416, and/or on at least one non-transitory computer readable storage medium such as a CD or DVD which may be removable.

FIG. 15 is a block diagram of an example implementation of the programmable circuitry 1412 of FIG. 14. In this example, the programmable circuitry 1412 of FIG. 14 is implemented by a microprocessor 1500. For example, the microprocessor 1500 may be a general-purpose microprocessor (e.g., general-purpose microprocessor circuitry). The microprocessor 1500 executes some or all of the machine-readable instructions of the flowcharts of FIGS. 11-13 to effectively instantiate the circuitry of FIG. 2 as logic circuits to perform operations corresponding to those machine readable instructions. In some such examples, the circuitry of FIG. 1 is instantiated by the hardware circuits of the microprocessor 1500 in combination with the machine-readable instructions. For example, the microprocessor 1500 may be implemented by multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 11-13.

The cores 1502 may communicate by a first example bus 1504. In some examples, the first bus 1504 may be implemented by a communication bus to effectuate communication associated with one(s) of the cores 1502. For example, the first bus 1504 may be implemented by at least one of an Inter-Integrated Circuit (I2C) bus, a Serial Peripheral Interface (SPI) bus, a PCI bus, or a PCIe bus. Additionally or alternatively, the first bus 1504 may be implemented by any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (L1) cache that may be split into an L1 data cache and an L1 instruction cache), the microprocessor 1500 also includes example shared memory 1510 that may be shared by the cores (e.g., Level 2 (L2 cache)) for high-speed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1414, 1416 of FIG. 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the local memory 1520, and a second example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In other examples, the AL circuitry 1516 also performs floating-point operations. In yet other examples, the AL circuitry 1516 may include first AL circuitry that performs integer-based operations and second AL circuitry that performs floating-point operations. In some examples, the AL circuitry 1516 may be referred to as an Arithmetic Logic Unit (ALU).

The registers 1518 are semiconductor-based structures to store data and/or instructions such as results of one or more of the operations performed by the AL circuitry 1516 of the corresponding core 1502. For example, the registers 1518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure, such as by being distributed throughout the core 1502 to shorten access time. The second bus 1522 may be implemented by at least one of an I2C bus, a SPI bus, a PCI bus, or a PCIe bus.

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages.

The microprocessor 1500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1500, in the same chip package as the microprocessor 1500 and/or in one or more separate packages from the microprocessor 1500.

FIG. 16 is a block diagram of another example implementation of the programmable circuitry 1412 of FIG. 14. In this example, the programmable circuitry 1412 is implemented by FPGA circuitry 1600. For example, the FPGA circuitry 1600 may be implemented by an FPGA. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1500 of FIG. 15 described above (which is a general purpose device that may be programmed to execute some or all of the machine readable instructions represented by the flowchart(s) of FIGS. 11-13 but whose interconnections and logic circuitry are fixed once fabricated), the FPGA circuitry 1600 of the example of FIG. 16 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 11-13. In particular, the FPGA circuitry 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 11-13. As such, the FPGA circuitry 1600 may be configured and/or structured to effectively instantiate some or all of the operations/functions corresponding to the machine readable instructions of the flowchart(s) of FIGS. 11-13 as dedicated logic circuits to perform the operations/functions corresponding to those software instructions in a dedicated manner analogous to an ASIC. Therefore, the FPGA circuitry 1600 may perform the operations/functions corresponding to the some or all of the machine readable instructions of FIGS. 11-13 faster than the general-purpose microprocessor can execute the same.

In the example of FIG. 16, the FPGA circuitry 1600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

The FPGA circuitry 1600 of FIG. 16, includes example input/output (I/O) circuitry 1602 to obtain and/or output data to/from example configuration circuitry 1604 and/or external hardware 1606. For example, the configuration circuitry 1604 may be implemented by interface circuitry that may obtain a binary file, which may be implemented by a bit stream, data, and/or machine-readable instructions, to configure the FPGA circuitry 1600, or portion(s) thereof. In some such examples, the configuration circuitry 1604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1606 may be implemented by external hardware circuitry. For example, the external hardware 1606 may be implemented by the microprocessor 1500 of FIG. 15.

The FPGA circuitry 1600 also includes an array of example logic gate circuitry 1608, a plurality of example configurable interconnections 1610, and example storage circuitry 1612. The logic gate circuitry 1608 and the configurable interconnections 1610 are configurable to instantiate one or more operations/functions that may correspond to at least some of the machine readable instructions of FIGS. 11-13 and/or other desired operations. The logic gate circuitry 1608 shown in FIG. 16 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations/functions. The logic gate circuitry 1608 may include other electrical structures such as look-up tables (LUTs), registers (e.g., flip-flops or latches), multiplexers, etc.

The configurable interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example dedicated operations circuitry 1614. In this example, the dedicated operations circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the programmable circuitry 1412 of FIG. 14, many other approaches are contemplated. For example, FPGA circuitry may include an on-board CPU, such as one or more of the example CPU 1620 of FIG. 15. Therefore, the programmable circuitry 1412 of FIG. 14 may additionally be implemented by combining at least the example microprocessor 1500 of FIG. 15 and the example FPGA circuitry 1600 of FIG. 16. In some such hybrid examples, one or more cores 1502 of FIG. 15 may execute a first portion of the machine readable instructions represented by the flowchart(s) of FIGS. 11-13 to perform first operation(s)/function(s), the FPGA circuitry 1600 of FIG. 16 may be configured and/or structured to perform second operation(s)/function(s) corresponding to a second portion of the machine readable instructions represented by the flowcharts of FIG. 11-13, and/or an ASIC may be configured and/or structured to perform third operation(s)/function(s) corresponding to a third portion of the machine readable instructions represented by the flowcharts of FIGS. 11-13.

It should be understood that some or all of the circuitry of FIG. 1 may, thus, be instantiated at the same or different times. For example, same and/or different portion(s) of the microprocessor 1500 of FIG. 15 may be programmed to execute portion(s) of machine-readable instructions at the same and/or different times. In some examples, same and/or different portion(s) of the FPGA circuitry 1600 of FIG. 16 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 1500 of FIG. 15 may execute machine readable instructions in one or more threads executing concurrently and/or in series. In some examples, the FPGA circuitry 1600 of FIG. 16 may be configured and/or structured to carry out operations/functions concurrently and/or in series. Moreover, in some examples, some or all of the circuitry of FIG. 1 may be implemented within one or more virtual machines and/or containers executing on the microprocessor 1500 of FIG. 15.

In some examples, the programmable circuitry 1412 of FIG. 14 may be in one or more packages. For example, the microprocessor 1500 of FIG. 15 and/or the FPGA circuitry 1600 of FIG. 16 may be in one or more packages. In some examples, an XPU may be implemented by the programmable circuitry 1412 of FIG. 14, which may be in one or more packages. For example, the XPU may include a CPU (e.g., the microprocessor 1500 of FIG. 15, the CPU 1620 of FIG. 16, etc.) in one package, a DSP (e.g., the DSP 1622 of FIG. 16) in another package, a GPU in yet another package, and an FPGA (e.g., the FPGA circuitry 1600 of FIG. 16) in still yet another package.

A block diagram illustrating an example software distribution platform 1705 to distribute software such as the example machine readable instructions 1432 of FIG. 14 to other hardware devices (e.g., hardware devices owned and/or operated by third parties from the owner and/or operator of the software distribution platform) is illustrated in FIG. 17. The example software distribution platform 1705 may be implemented by any computer server, data facility, cloud service, etc., capable of storing and transmitting software to other computing devices. The third parties may be customers of the entity owning and/or operating the software distribution platform 1705. For example, the entity that owns and/or operates the software distribution platform 1705 may be a developer, a seller, and/or a licensor of software such as the example machine readable instructions 1432 of FIG. 14. The third parties may be consumers, users, retailers, OEMs, etc., who purchase and/or license the software for use and/or re-sale and/or sub-licensing. In the illustrated example, the software distribution platform 1705 includes one or more servers and one or more storage devices. The storage devices store the machine readable instructions 1432, which may correspond to the example machine readable instructions of FIGS. 11-13, as described above. The one or more servers of the example software distribution platform 1705 are in communication with an example network 1710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1432 from the software distribution platform 1705. For example, the software, which may correspond to the example machine readable instructions of FIG. 11-13, may be downloaded to the example programmable circuitry platform 1400, which is to execute the machine readable instructions 1432 to implement the head pose estimation circuitry 100. In some examples, one or more servers of the software distribution platform 1705 periodically offer, transmit, and/or force updates to the software (e.g., the example machine readable instructions 1432 of FIG. 14) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is openended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

Systems, apparatus, methods, and articles of manufacture are disclosed herein to estimate a head pose of a user in an image. Examples disclosed herein train models based on augmented datasets and determine a confidence metric related to the likelihood that an object in an image is a face. Images of objects that are not faces or are subregions of a face can be identified based on the confidence metric and indicated as images that are not to be tracked. In such examples, computing resources can be saved by not tracking objects from which a head pose cannot be estimated. Disclosed systems, apparatus, articles of manufacture, and methods are accordingly directed to one or more improvement(s) in the operation of a machine such as a computer or other electronic and/or mechanical device.

Systems, apparatus, articles of manufacture, and methods are disclosed to estimate a pose of a head of a user of an electronic device. Example 1 includes an apparatus to estimate a head pose, which includes interface circuitry;

instructions; and at least one processor circuit to be programmed by the instructions to: identify a plurality of facial landmarks in a plurality of images; identify initial image data based on the plurality of facial landmarks; augment the initial image data with a transformation operation; and train a neural network based on the initial image data and the augmented image data to: infer three-dimensional model parameters; and infer a confidence metric.

Example 2 includes the apparatus of Example 1, wherein one or more of the at least one processor circuit is to: perform an analysis of an input image using the neural network; and output, based on the analysis: three-dimensional model parameters for the input image; and a confidence metric for the input image.

Example 3 includes the apparatus of Example 2, wherein one or more of the at least one processor circuit is to estimate a head pose based on the three-dimensional model parameters for the input image when the confidence metric for the input image satisfies a threshold.

Example 4 includes the apparatus of any of Examples 2 or 3, wherein one or more of the at least one processor circuit is to track a face in the input image when the confidence metric for the input image satisfies a threshold.

Example 5 includes the apparatus of any of Examples 2-4, wherein one or more of the at least one processor circuit is to track the head pose over multiple images when the confidence metric of the input image satisfies a threshold.

Example 6 includes the apparatus of Example 5, wherein one or more of the at least one processor circuit is to set a bounding box in the input image as an expectation for a position of the head in a subsequent image.

Example 7 includes the apparatus of any of Examples 2-6, wherein one or more of the at least one processor circuit is to determine at least one of an expression of a face in the input image or an identity of the face based on the model and when the confidence metric of the input image satisfies a threshold.

Example 8 includes the apparatus of any of Examples 2-7, wherein one or more of the at least one processor circuit is to preclude tracking an object in the input image when the confidence metric of the input image does not satisfy a threshold.

Example 9 includes the apparatus of any of Examples 1-8, wherein the transformation operation includes one or more of a crop of the image, a change in a field of view of the image, a resizing of the image, a scaling of the image, a rotation of the image, or a shifting of the image.

Example 10 includes the apparatus of any of Examples 1-9, wherein the instructions program one or more of the at least one processor circuit to implement transformation operations including: cropping the image, changing in a field of view of the image, resizing the image, scaling the image, and shifting of the image; and the at least one processor circuit is to augment the image data with one or more of the transformation operations.

Example 11 includes a machine readable storage medium that includes instructions to cause at least one processor circuit to at least: identify a plurality of facial landmarks in a plurality of images; identify initial image data based on the plurality of facial landmarks; augment the initial image data with a transformation operation; and train a neural network based on the initial image data and the augmented image data to: infer three-dimensional model parameters; and infer a confidence metric.

Example 12 includes the storage medium of Example 11, wherein the instructions are to cause at least one processor circuit to perform an analysis of an input image using the neural network; and output, based on the analysis: three-dimensional model parameters for the input image; and a confidence metric for the input image.

Example 13 includes the storage medium of Example 12, wherein the instructions are to cause at least one processor circuit to estimate a head pose based on the three-dimensional model parameters for the input image when the confidence metric for the input image satisfies a threshold.

Example 14 includes the storage medium of any of Examples 12 or 13, wherein the instructions are to cause at least one processor circuit to track a face in the input image when the confidence metric for the input image satisfies a threshold.

Example 15 includes the storage medium of any of Examples 12-14, wherein the instructions are to cause at least one processor circuit to track a head pose over multiple images when the confidence metric of the input image satisfies a threshold.

Example 16 includes the storage medium of Example 15, wherein the instructions are to cause at least one processor circuit to set a bounding box in the input image as an expectation for a position of the head in a subsequent image.

Example 17 includes the storage medium of any of Examples 12-16, wherein the instructions are to cause at least one processor circuit to determine at least one of an expression of a face in the input image or an identity of the face based on the model and when the confidence metric of the input image satisfies a threshold.

Example 18 includes the storage medium of any of Examples 12-17, wherein the instructions are to cause at least one processor circuit to remove tracking of an object in the input image when the confidence metric of the input image does not satisfy a threshold.

Example 19 includes the storage medium of any of Examples 11-18, wherein the transformation operation includes one or more of a crop of the image, a change in a field of view of the image, a resizing of the image, a scaling of the image, or a shifting of the image.

Example 20 includes the storage medium of any of Examples 11-19, wherein the instructions program the at least one processor circuit to implement transformation operations including: cropping the image, changing in a field of view of the image, resizing the image, scaling the image, and shifting of the image; and the at least one processor circuit is to augment the image data with one or more of the transformation operations.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1. An apparatus to estimate a head pose, the apparatus comprising:

   interface circuitry;
   instructions; and
   at least one processor circuit to be programmed by the instructions to:

   identify a plurality of facial landmarks in a plurality of images;
   identify initial image data based on the plurality of facial landmarks;
   augment the initial image data with a transformation operation; and
   train a neural network based on the initial image data and the augmented image data to:

   infer three-dimensional model parameters; and
   infer a confidence metric.

2. The apparatus of claim 1, wherein one or more of the at least one processor circuit is to:

   perform an analysis of an input image using the neural network; and
   output, based on the analysis:

   three-dimensional model parameters for the input image; and
   a confidence metric for the input image.

3. The apparatus of claim 2, wherein one or more of the at least one processor circuit is to estimate a head pose based on the three-dimensional model parameters for the input image when the confidence metric for the input image satisfies a threshold.

4. The apparatus of any of claims 2 or 3, wherein one or more of the at least one processor circuit is to track a face in the input image when the confidence metric for the input image satisfies a threshold.

5. The apparatus of any of claims 2-4, wherein one or more of the at least one processor circuit is to track the head pose over multiple images when the confidence metric of the input image satisfies a threshold.

6. The apparatus of claim 5, wherein one or more of the at least one processor circuit is to set a bounding box in the input image as an expectation for a position of the head in a subsequent image.

7. The apparatus any of claims 2-6, wherein one or more of the at least one processor circuit is to determine at least one of an expression of a face in the input image or an identity of the face based on the model and when the confidence metric of the input image satisfies a threshold.

8. The apparatus of any of claims 2-7, wherein one or more of the at least one processor circuit is to preclude tracking an object in the input image when the confidence metric of the input image does not satisfy a threshold.

9. The apparatus of any preceding claim, wherein the transformation operation includes one or more of a crop of the image, a change in a field of view of the image, a resizing of the image, a scaling of the image, a rotation of the image, or a shifting of the image.

10. The apparatus of any preceding claim, wherein the instructions program one or more of the at least one processor circuit to implement transformation operations including:

cropping the image,
changing in a field of view of the image,
resizing the image,
scaling the image, and
shifting of the image; and
the at least one processor circuit is to augment the image data with one or more of the transformation operations.

11. A method to estimate head pose, the method comprising:

identifying a plurality of facial landmarks in a plurality of images;
identifying initial image data based on the plurality of facial landmarks;
augmenting the initial image data with a transformation operation; and
training a neural network based on the initial image data and the augmented image data to:

infer three-dimensional model parameters; and
infer a confidence metric.

12. The method of claim 11, further including:

performing an analysis of an input image using the neural network; and
outputting, based on the analysis:

three-dimensional model parameters for the input image; and
a confidence metric for the input image.

13. The method of claim 12, further including:

comparing the confidence metric to a threshold; and
at least one of:

estimating a head pose based on the three-dimensional model parameters for the input image when the confidence metric for the input image satisfies the threshold;
tracking a face in the input image when the confidence metric for the input image satisfies the threshold;
tracking a head pose over multiple images when the confidence metric of the input image satisfies the threshold;
determining an expression of a face in the input image based on the model and when the confidence metric of the input image satisfies the threshold;
determining an identity of the face based on the model and when the confidence metric of the input image satisfies the threshold; or
removing tracking of an object in the input image when the confidence metric of the input image does not satisfy the threshold.

14. The storage medium of any of claims 11-13, wherein the transformation operation includes one or more of a crop of the image, a change in a field of view of the image, a resizing of the image, a scaling of the image, or a shifting of the image.

15. Machine-readable storage including machine-readable instructions, when executed, to implement a method or realize an apparatus as claimed in any preceding claim.

**FIG. 1**

**FIG. 2**

300

**FIG. 3**

(0,0)

(0,0)

**FIG. 4**

LABEL
★ 3DMM PROJECTION

LABELED INPUT IMAGE

**FIG. 5**

LABEL
★ 3DMM PROJECTION

EXPANDED FoV

ORIGINAL FoV

**FIG. 6**

LABEL
★ 3DMM PROJECTION

CROP AND RESIZE

**FIG. 7A**

LABEL
★ 3DMM PROJECTION

SHIFT, CROP AND RESIZE

**FIG. 7B**

LABEL
★ 3DMM PROJECTION

FoV, CROP AND RESIZE

**FIG. 7C**

LABEL
★ 3DMM PROJECTION

FoV, SHIFT, CROP, RESIZE

**FIG. 7D**

FIG. 8A

FIG. 8B

FACE (CONFIDENCE = 1)

FIG. 9A

SUBFACE (CONFIDENCE = 0)

FIG. 9B

NONFACE (CONFIDENCE = 0)

FIG. 9C

**FIG. 10A**

**FIG. 10B**

**FIG. 10C**

1100

START

1105
ACCESS DATASET OF POSE VARIATIONS

1110
GENERATE LABELED DATASET

1115
AUGMENT DATASET

1120
TRAIN MODEL FOR 3DMM PARAMETERS

1125
TRAIN MODEL FOR CONFIDENCE METRIC

1130
APPLY MODEL

END

FIG. 11

GENERATE LABELED DATASET ———1110

EXTRACT FACE BOUNDING BOX ———1205

EXTRACT FACE LANDMARKS ———1210

ANNOTATE IMAGE DATA ———1215

FIT MODEL ———1220

PRODUCE RENDERED IMAGE ———1225

DETERMINE LOSS COEFFICIENT ———1230

FILTER RESULTS ———1235

FINALIZE LABELED DATASET ———1240

END

**FIG. 12**

APPLY MODEL —1130

DETECT NEW OBJECT TO TRACK? —1305 NO

YES

ADD OBJECT TO TRACKING LIST —1310

APPLY MODEL TO AN OBJECT IN THE TRACKING LIST —1315

DETERMINE 3DMM PARAMETERS AND CONFIDENCE METRIC —1320

DOES THE CONFIDENCE METRIC MEET A THRESHOLD? —1325

NO                                                          YES

DETERMINE THAT THE OBJECT IS NOT A FACE —1355

REMOVE OBJECT FROM TRACKING LIST —1360

DO NOT TRACK OBJECT —1365

DETERMINE THAT THE OBJECT IS A FACE —1330

EXTRACT POSE —1335

IDENTIFY BOUNDING BOX —1340

SET BOUNDING BOX AS EXPECTED POSITION IN NEXT FRAME —1345

IS THERE ANOTHER OBJECT AND/OR IMAGE TO ANALYZE? —1350

YES

NO

END

**FIG. 13**

FIG. 14

**FIG. 15**

**FIG. 16**

SOFTWARE
DISTRIBUTION
PLATFORM

— 1705

INSTR
1432

— 1710

NETWORK

PROCESSOR
PLATFORM(S)

— 1400, 1500, 1600

1432

## FIG. 17

Europäisches
Patentamt
European
Patent Office
Office européen
des brevets

# EUROPEAN SEARCH REPORT

**Application Number**

EP 25 15 4350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272806 A1 (WALKER KEVIN [GB] ET AL) 27 August 2020 (2020-08-27)<br>* abstract *<br>* paragraph [0002] *<br>* paragraph [0011] *<br>* paragraph [0048] *<br>* paragraph [0051] *<br>* paragraph [0065] *<br>* paragraph [0071] *<br>* paragraph [0087] *<br>* paragraphs [0099], [0100] *<br>* paragraph [0132] *<br>* paragraphs [0144] - [0146] *<br>* paragraph [0157] * | 1-15 | INV.<br>G06V10/764<br>G06V10/82<br>G06V20/64<br>G06V40/16 |
| X | HEYUAN LI ET AL: "DSFNet: Dual Space Fusion Network for Occlusion-Robust 3D Dense Face Alignment",<br>ARXIV.ORG, CORNELL UNIVERSITY LIBRARY, 201 OLIN LIBRARY CORNELL UNIVERSITY ITHACA, NY 14853,<br>19 May 2023 (2023-05-19), XP091512922,<br>* abstract *<br>* Sections 3.1, 3.2.1, 4.1, 4.2 and 4.3 *<br>* figure 3 * | 1-3,7, 9-12,14, 15 | |
| | | | **TECHNICAL FIELDS SEARCHED (IPC)**<br><br>G06V |

The present search report has been drawn up for all claims

| Place of search | Date of completion of the search | Examiner |
|---|---|---|
| The Hague | 11 July 2025 | Peelen, Bastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 4350

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| US 2020272806 A1 | 27-08-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63565987